# EUROPEAN PATENT APPLICATION

(11) **EP 3 988 507 A1**
(43) Date of publication of application: **27.04.2022**
(21) Application number: 21204832.6
(22) Date of filing: 26.10.2021
(51) Int. Cl.: C02F 9/00, C02F 1/00, B67D 1/07, B01D 35/16, C02F 1/02, C02F 1/28

(54) **WATER PURIFIER**

(30) Priority: 26.10.2020 KR 20200139349
(71) Applicant: LG Electronics Inc., SEOUL 07336 (KR)
(72) Inventor: JI, Jingyu, 08592 Seoul (KR); JANG, Munjae, 08592 Seoul (KR)
(74) Representative: Ter Meer Steinmeister & Partner

(57) **Abstract**

A water purifier of the present disclosure includes a housing forming a storage space, a filter (F) provided inside the housing to purify water flowing thereinto, a water supply flow path (510) which supplies water supplied from a water supply source outside the housing to the filter, a water supply valve (610) provided on the water supply flow path to regulate the flow of water passing through the water supply flow path, a water take-out nozzle (210) provided on the outside of the housing and through which the water passing through the filter is taken out, a purified water flow path (520) configured to guide the purified water passing through the filter toward the water take-out nozzle, a hot water flow path (540) having one side branched from the purified water flow path and the other side connected to a side of the water take-out nozzle, a hot water module (160) provided on the hot water flow path to heat the purified water passing through the hot water flow path, a sterilization flow path (530) having one side branched from the water supply flow path and the other side connected to a side of the filter, a sterilization valve (620) provided on the sterilization flow path to regulate the flow of water passing through the sterilization flow path, and a sterilization module (180) provided on the sterilization flow path to heat water passing through the sterilization flow path, in which the sterilization flow path can supply water heated in the sterilization module to the water supply flow path.

## Description

### BACKGROUND

In general, a water purifier is a device that filters water to remove impurities and is widely used for home use.

In detail, the water purifier is connected to the water supply to remove floating substances, harmful components, or the like contained in the tap water using a filter and is configured to purify as much water as desired according to the user's manipulation and to take out the purified water.

Such water purifiers are released in a variety of products capable of taking out hot and cold water as well as purified water. In addition, in recent years, a water purifier that is small in size and can be installed in various installation environments has been developed.

In addition, a pipe for flowing purified water is provided inside the water purifier, and a valve, a water-intake port, and the like are provided in the pipe. In a case where the water purifier is used for a long time, foreign substances contained in the water may be caught in pipes, valves, water-intake ports, or the like, and microorganisms or the like may be propagated therein.

However, in the prior art, in order to wash the flow path or the like of the water purifier, there is a problem that the cover must be separated from the main body of the water purifier and various pipes exposed to the outside must be connected to a separate washing device.

According to Korean Patent Publication No. 10-2001-0111954, a water purifier is provided which is installed in the order of a precipitation filter, a free carbon filter, a membrane filter, and a post carbon filter and includes a purified water flow path and a take-out nozzle.

In the water purifier of the prior art as described above, purified water passing through the filter is directly supplied to the water take-out nozzle along the purified water flow path.

In addition, in a case of a water purifier having a cold water function, the purified water passing through the filter is cooled while passing through the cold water module and then may be supplied to the water take-out nozzle along the cold water flow path. In addition, in a case of a water purifier having a hot water function, the purified water passing through the filter is heated while passing through the hot water tank and then supplied to the water take-out nozzle along the hot water flow path.

As described above, the purified water taken out from the filter passes through several flow paths, valves, tanks, and the like until being taken out through the water take-out nozzle.

In this case, in a case where the water purifier is used for a long time, foreign substances contained in the water may be caught in pipes, valves, and the like, and microorganisms or the like may be propagated therein.

Therefore, it is necessary to periodically sterilize the flow path, the valve, and the like.

In the case of the prior art, since the sterilization process of the flow paths, valves, and the like is complicated, most of the professional coordinators who have received separate training visit and sterilize the flow paths, valves, and the like of the water purifier.

Therefore, even if the user recognizes the need to sterilize the flow paths, valves, and the like of the water purifier, the water purifier cannot be sterilized at a desired time, and the maintenance and management cost of the water purifier is inevitably increased due to the visit care of a professional coordinator.

In addition, in the case of the prior art, it is necessary to provide a separate sterilization kit for sterilizing the flow paths, valves, and the like of the water purifier.

In this case, there is a problem in that the cost is added to provide the sterilization kit, and the difficulty of the sterilization operation through the sterilization kit is high, so that it is difficult for the user to directly proceed with the sterilization.

In addition, in the case of the prior art, it was impossible to sterilize the flow paths, the valves, and the like through which the water passing through the filter device passes until it is supplied to the water take-out nozzle. Therefore, there is a problem that is not hygienic.

In addition, in the case of the prior art, the manager periodically visits once every few months to wash the water flow path in the water purifier in a face-to-face manner, but recently, with the increase of single-person households and preference for non-face-to-face methods, a method in which the user directly manages the water purifier is required.

In the case of the existing 'self-managed' water purifier, the flow path after the filter is washed with electrolyzed water, but this has limitations in that it is impossible to wash the filter and to remove bacteria attached to the flow path.

### SUMMARY

An object of the present disclosure is to provide a water purifier capable of sterilizing various flow paths and valves inside the water purifier by circulating hot water heated in a separate sterilization module.

An object of the present disclosure is to provide a water purifier capable of simultaneously removing foreign substances while sterilizing flow paths and valves by flow rate because hot water sterilization proceeds while continuous water take-out proceeds.

In addition, another object of the present disclosure is to provide a water purifier capable of washing the entire flow path and valve inside the water purifier from a water supply flow path connected to a water supply source to a water take-out nozzle or water take-out flow path.

An object of the present disclosure is to provide a water purifier capable of automatically washing flow paths and valves inside the water purifier only by pressing a button at a time desired by a user.

The object is solved by the features of the indepdent claims. Preferred mebodiments are given in the depdent claims.

A water purifier of the present disclosure for achieving the above object may include a housing forming a storage space, a filter provided inside the housing to purify water flowing thereinto, a water supply flow path which supplies water supplied from a water supply source outside the housing to the filter, a water supply valve provided on the water supply flow path to regulate the flow of water passing through the water supply flow path, a water take-out nozzle provided on the outside of the housing and through which the water passing through the filter is taken out, a purified water flow path configured to guide the purified water passing through the filter toward the water take-out nozzle, a hot water flow path having one side branched from the purified water flow path and the other side connected to a side of the water take-out nozzle, a hot water module provided on the hot water flow path to heat the purified water passing through the hot water flow path.

In one or more embodiments, the water purifier may include a sterilization flow path having one side branched from the water supply flow path and the other side connected to a side of the filter.

A sterilization valve may be provided on the sterilization flow path to regulate the flow of water passing through the sterilization flow path.

A sterilization module may be provided on the sterilization flow path to heat water passing through the sterilization flow path, in which the sterilization flow path may supply water heated in the sterilization module to the water supply flow path.

The water supply flow path may include a first water supply flow path connecting the water supply source and the water supply valve.

The water supply flow path may include a second water supply flow path connecting the water supply valve and the filter.

The sterilization flow path may be branched from the first water supply flow path and/or then be merged into the second water supply flow path.

In the first water supply flow path, a pressure reducing valve configured to adjust the water pressure of raw water flowing into the first water supply flow path may be installed.

In the sterilization flow path, a flow rate adjustment valve may be installed between the sterilization valve and the sterilization module.

A water purification valve configured to regulate the flow of water may be installed in the purified water flow path.

The purified water flow path may include a first purified water flow path connecting the filter and the water purification valve.

The purified water flow path may include a second purified water flow path connecting the water purification valve and a water take-out valve installed on the side of the water take-out nozzle.

The hot water flow path may be branched from the first purified water flow path and/or then merge at the second purified water flow path.

A flow rate adjustment valve configured to adjust the flow rate of water flowing into the hot water module may be installed in the hot water flow path.

The water purifier of may further include a water take-out flow path having one side connected to the water take-out nozzle and the other side connected to the second purified water flow path.

The water purifier of may further include a water take-out valve configured to regulate the flow of water flowing into the water take-out nozzle installed in the water take-out flow path.

A drain valve may be installed in the water take-out valve together therewith.

The water discharged from the drain valve may be discharged to the outside of the housing through a drain flow path.

At least a portion of the hot water generated by the sterilization module and flowing into the water take-out valve or the drain valve may be discharged to the water take-out nozzle.

The remaining portion thereof may be discharged to the drain flow path.

The water purifier may further include a cold water flow path having one side branched from the purified water flow path and the other side connected to a side of the water take-out nozzle.

The water purifier may further include a cold water module provided on the cold water flow path to cool the water passing through the cold water flow path.

The water purifier may further include a cold water valve provided on the cold water flow path to regulate the flow of water flowing through the cold water flow path.

The cold water valve and the water purification valve may be integrally formed.

The hot water generated by the sterilization module may sterilize a hot water module, a cold water module, and various flow paths and valves while flowing the purified water flow path, the hot water flow path, and the cold water flow path through the filter.

The water purifier of claim may include a manipulation part configured to receive a sterilization command from the user.

The water purifier may further include a controller which turns on the sterilization valve and the sterilization module and turns off the water supply valve, the hot water module, and the cold water module when a sterilization command is input to the manipulation part.

### BRIEF DESCRIPTION OF THE DRAWINGS

Fig. 1 is a perspective view illustrating a water purifier of an embodiment of the present disclosure.
Fig. 2 is an exploded perspective view illustrating a water purifier of an embodiment of the present disclosure.
Fig. 3 is a perspective view illustrating a water take-out module, which is a component of the present disclosure.
Fig. 4 is a view illustrating flow paths and valves in the water purifier of the present disclosure.
Fig. 5 is a block diagram illustrating a water purifier of an embodiment of the present disclosure.
Fig. 6 is a flowchart illustrating a method for controlling a water purifier of an embodiment of the present disclosure.

### DETAILED DESCRIPTION OF THE EMBODIMENTS

Hereinafter, some embodiments of the present disclosure will be described in detail with reference to exemplary drawings. In adding reference numerals to components in each drawing, it should be noted that the same components are given the same reference numerals as much as possible even though they are indicated in different drawings. In addition, in describing the embodiment of the present disclosure, if it is determined that a detailed description of a related known configuration or function interferes with the understanding of the embodiment of the present disclosure, the detailed description thereof will be omitted.

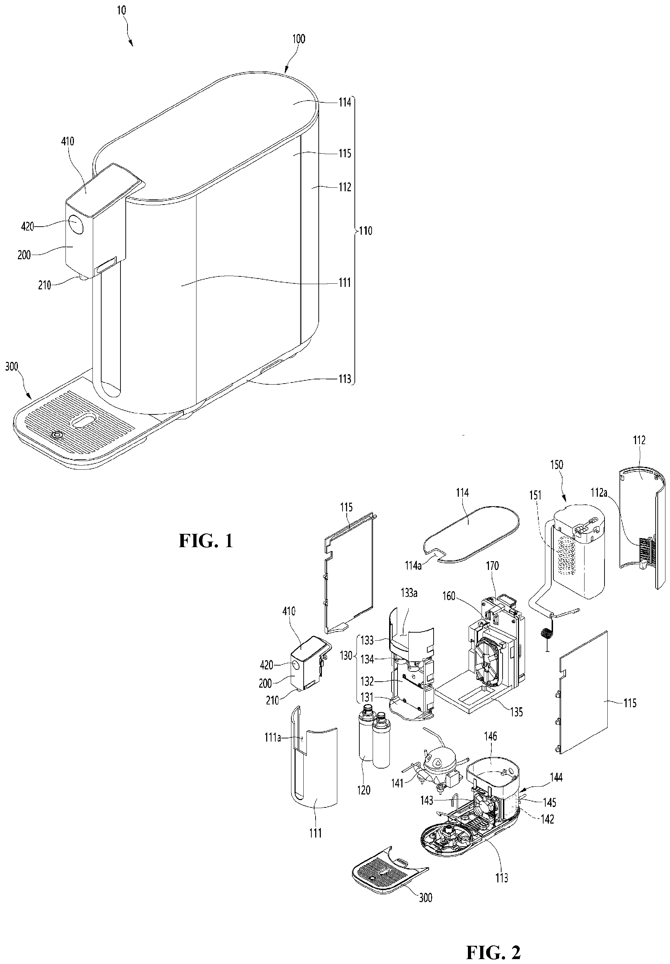

Fig. 1 is a perspective view illustrating a water purifier according to an embodiment of the present disclosure, and Fig. 2 is an exploded perspective view illustrating the water purifier.

Referring to Figs. 1 and 2, the water purifier 10 according to an embodiment of the present disclosure may include a housing 110 which forms a storage space and forms an outer shape of the water purifier, a water purifier main body 100 which is provided inside the housing 110 and includes a filter 120 for filtering raw water flowing from the outside, a water take-out module 200 in which a water take-out nozzle 210 is provided which is formed to protrude forward of the water purifier main body 100 and supplies the water passing through the filter 120 to the outside of the water purifier main body 100, and a tray 300 provided below the water take-out nozzle 210.

First, the outer shape of the water purifier main body 100 may be formed by the housing 110. The housing 110 may be composed of a front cover 111 forming a front outer appearance thereof, a rear cover 112 forming a rear outer appearance thereof, a base 113 forming a lower surface thereof, a top cover 114 forming an upper surface thereof, and side panels 115 forming both side surfaces in the left and right direction. The front cover 111 and the rear cover 112, the base 113 and the top cover 114, and a pair of side panels 115 are assembled with each other to configure a housing 110 that forms the outer appearance of the water purifier main body 100.

At this time, the front and rear ends of the base 113 and the top cover 114 may be formed to be rounded, and the front cover 111 and the rear cover 112 may be formed to be convex forward and backward, respectively, to have a curvature corresponding to the front and rear ends of the base 113 and the top cover 114 which are formed to be rounded.

In one or more embodiments, a water take-out nozzle 210 is formed on the front surface of the water purifier main body 100. The water take-out nozzle 210 may be formed to protrude downward of the water take-out module 200 formed to protrude forward of the front cover 111. Accordingly, purified water may be taken out through the water take-out nozzle 210.

To this end, mounting grooves 111a and 114a may be formed in the front cover 111 and/or the top cover 114, respectively, so that the water take-out module 200 can be inserted thereinto and fixed thereto.

In detail, the mounting groove 111a of the front cover 111 has a shape concave downward from the upper end of the center of the front cover 111, and/or the mounting groove 114a of the top cover 114 has a concave shape from the tip to the rear of the top cover 114.

A filter 120 for water purification and a filter bracket 130 to which a plurality of valves (not illustrated) are mounted are provided inside the housing 110.

The filter bracket 130 may be composed of a bottom part 131 coupled to the base 113, a filter receiving part 132 in which the filter 120 is received, and a water take-out module mounting part 133 in which the water take-out module 200 is mounted.

In detail, the bottom part 131 is formed to correspond to the shape of the front end of the base 113 and is coupled to the base 113. The mounting position of the filter bracket 130 may be fixed by the coupling of the bottom part 131, and the shape of the bottom surface of the filter receiving part 132 may be formed.

The filter bracket 130 may be caught and constrained to the base 113 by a hook method and may also be fixed by a screw fastened to the lower surface of the base 113.

The filter receiving part 132 is formed to extend in the vertical direction and forms a recessed space from the front (left in the drawing) to the rear (right in the drawing) so that the filter 120 can be received. A plurality of filters 120 may be mounted on the filter receiving part 130. The filter 120 is for purification of supplied raw water (tap water) and may be configured to combine filters having various functions.

In one or more embodiments, a filter socket 134 to which the filter 120 is mounted may be further provided in the filter receiving part 130, a pipe through which purified water flows is provided in the filter socket 134, and the pipe may be connected to a plurality of valves (not illustrated). Accordingly, the raw water passes through the filter 120 in turn and then can be directed to a valve (not illustrated) for water supply.

A plurality of valves (not illustrated) may be provided on the rear surface (right side of the drawing) of the filter receiving part 132, and the valves (not illustrated) selectively supply cold water and hot water to the filter 120 as well as the cold water module 150 and hot water module 160, and the water take-out module 200.

The water take-out module mounting part 133 is formed at the upper end of the filter receiving part 132. The water take-out module mounting part 133 has a structure in which the water take-out module 200 can be inserted and fixed by forming a mounting groove 133a concave from top to bottom at the top. In this case, the water take-out module mounting part 133 may be formed to have a curvature corresponding to the curvature of the front cover 111 covering the front of the water take-out module mounting part 133. An upper portion of the filter bracket 130 may be shielded by a top cover 114.

A compressor 141 and a condenser 142 are provided on the upper surface of the base 113. A cooling fan 143 is provided between the compressor 141 and the condenser 142 and thus configured to allow cooling of the compressor 141 and the condenser 142. The compressor 141 may be an inverter type compressor capable of adjusting the cooling capacity by varying the frequency. Accordingly, the cooling of the purified water can be efficiently performed, thereby reducing power consumption.

The condenser 142 may be located at the rear of the base 113 and may be located at a position corresponding to the discharge port 112a formed in the rear cover 112. The condenser 142 may be formed by bending a flat tube type refrigerant pipe a plurality of times in order to efficiently use space and improve heat exchange efficiency at the same time and is configured to be received in the condenser bracket 144.

The condenser bracket 144 includes a condenser mounting part 145 to which the condenser 142 is fixed, and a cold water module mounting part 146 to which a cold water module 150 for making cold water can be mounted. The condenser mounting part 145 forms a space having a shape corresponding to the overall shape of the condenser 142 to receive the condenser 142. In addition, the condenser mounting part 145 is formed such that portions facing the cooling fan 143 and the discharge port 112a are opened, respectively, so that the condenser 142 can be effectively cooled.

In one or more embodiments, the cold water module mounting part 146 is formed above the condenser bracket 144, that is, above the condenser mounting part 145. The lower end portion of the cold water module 150 is inserted into the cold water module mounting part 146, and thus the cold water module mounting part 146 fixes the cold water module 150.

The cold water module 150 is for making cold water by cooling the purified water and includes a cooling tank, and the cooling tank is filled with the cooling water for heat exchange with the inflow purified water. In one or more embodiments, an evaporator for cooling the cooling water is received in the cooling tank, and a cooling flow path 151 is formed so that purified water passing through the filter 120 can pass through the inside of the cooling water module. Accordingly, the purified water may be cooled while circulating inside the cold water module 150 along the cooling flow path 151.

A support plate 135 extending toward the cold water module 150 is further provided on one side of the filter bracket 130. The support plate 135 is provided above the compressor 141 and extends from the filter bracket 130 to the condenser bracket 144 to provide a space in which the heating and control modules 160 and 170 are mounted.

The heating module 160 may include a hot water module 160 for making hot water. The control module 170 may include a control assembly 170 for controlling overall driving of the water purifier 10. The hot water module 160 and the control assembly 170 may be coupled to each other to form a state of a single module and/or may be mounted on the support plate 135 in a coupled state.

The hot water module 160 is for heating purified water and may heat purified water using various well-known methods including an induction heating (IH) method. The hot water module 160 can heat water immediately and at a high speed when hot water is taken out, and hot water of a desired temperature can be taken out according to a user's manipulation.

The control assembly 170 is for controlling the operation of the water purifier 10 and can be configured to control the compressor 141, the cooling fan 143, various valves and sensors, the hot water module 160, and the like. The control assembly 170 may be modularly configured by a combination of PCBs divided into a plurality of parts for each function. In the structure in which the water purifier 10 takes out only cold water and purified water, the hot water module 160 and a PCB for controlling the same may be omitted, and at least one PCB may be omitted in this way.

Meanwhile, the purified water taken out from the filter 120 of the water purifier 10 passes through several flow paths, valves, and the like until taken out to the water taken out nozzle 210 or the drain port.

When the water purifier is used for a long time, foreign substances contained in the water may be caught in the flow paths, the valves, and the like, and microorganisms or the like may be propagated therein.

Therefore, it is necessary to periodically sterilize the flow paths, the valves, and the like.

In the present disclosure, in addition to the hot water module 160 provided for generating hot water, a separate sterilization module may generate hot water and use the generated hot water to sterilize the flow paths and the valves.

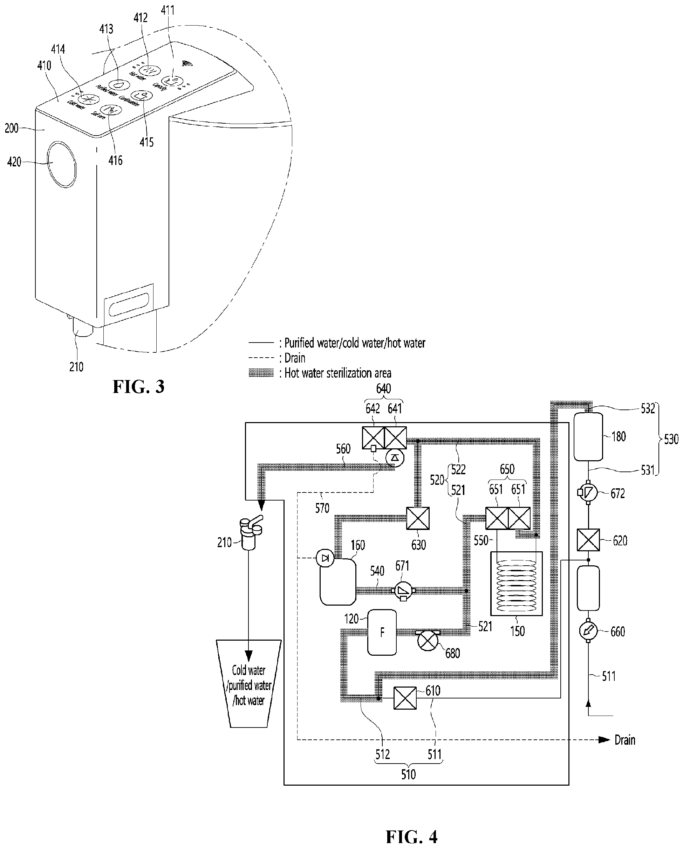

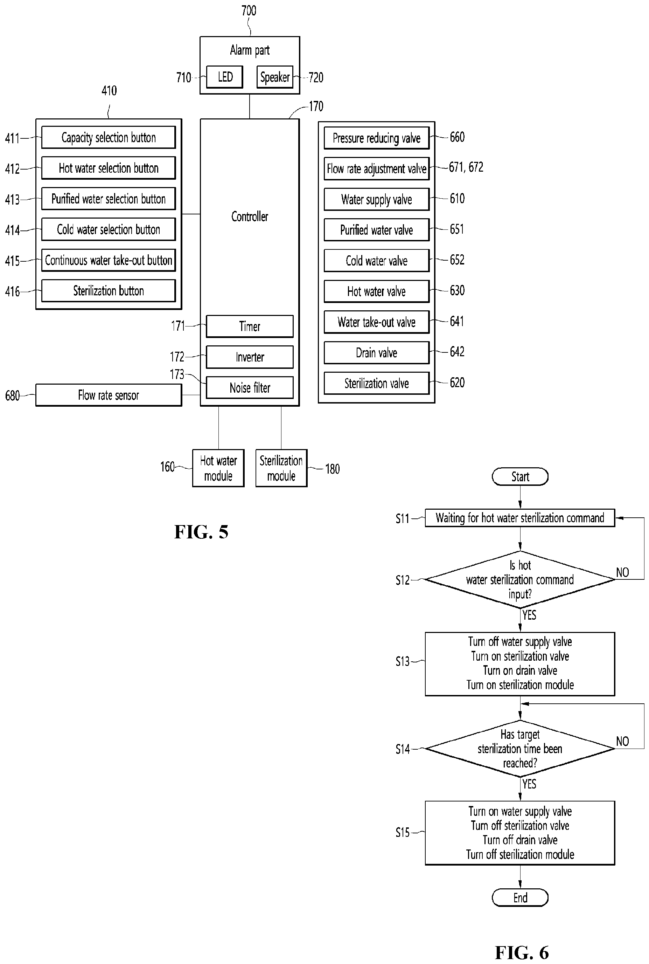

Fig. 3 is a perspective view illustrating a water take-out module, which is a component of the present disclosure, Fig. 4 is a view illustrating a flow path and a valve in the water purifier of the present disclosure, and Fig. 5 is a block diagram illustrating a water purifier according to an embodiment of the present disclosure.

Referring to Figs. 3 to 5, the water purifier according to the present disclosure includes a water supply flow path 510 for supplying water supplied from a water supply source to the filter 120, and a water supply valve 610 which is provided on the water supply flow path 510 to regulate the flow of water passing through the water supply flow path 510.

The water purifier according to the present disclosure includes a purified water flow path 520 for guiding the purified water passing through the filter 120 toward the water take-out nozzle 210, a hot water flow path 540 having one side branched from the purified water flow path 520 and the other side connected to a side of the water take-out nozzle 210, and a hot water module 160 which is provided on the hot water flow path 540 to heat the purified water passing through the hot water flow path 540.

The water purifier according to the present disclosure may include a sterilization flow path 530 having one side branched from the water supply flow path 510 and the other side connected to a side of the filter 120, a sterilization valve 620 which is provided on the sterilization flow path 530 to regulate the flow of water passing through the sterilization flow path 530, and a sterilization module 180 which is provided on the sterilization flow path 530 to heat the water passing through the sterilization flow path 530. The sterilization module 180 may include a heating means for heating water passing through the sterilization flow path 530. For example, the sterilization module 180 may heat the water passing through the sterilization flow path 530 by use of an induction heating method.

The sterilization flow path 530 supplies the water heated by the sterilization module 180 to the water supply flow path 510.

The hot water module 160 may include a heating tank. A heater may be provided in the heating tank. For example, the hot water module 160 may heat the water passing through the hot water flow path in an induction heating method.

The water purifier 10 as described above may purify water supplied from an external water supply source and then discharge the purified water to the outside, or heat the purified water with hot water and then discharge the purified water to the outside.

To this end, the water purifier 10 may be connected to an external water supply source by a water supply flow path 510 to receive water.

In one or more embodiments, the water supply flow path 510 may be provided with a water supply valve 610 that regulates the flow of water supplied from the water supply source to the filter 120. For example, when the water supply valve 610 is opened, water is supplied from the water supply source to the filter 120, and when the water supply valve 610 is closed, the flow of water flowing from the water supply source to the filter 120 may be blocked.

In one or more embodiments, a pressure reducing valve 660 for adjusting the water pressure of raw water flowing toward the filter may be installed in the water supply flow path 510.

As described above, the water supplied from the water supply source through the water supply flow path 510 passes through the pressure reducing valve 660 and the water supply valve 610 sequentially, and then passes through the filter 120 and is purified into purified water.

In this case, one or more filters 120 may be provided, and in a case where a plurality of filters are provided, the filter 120 may be configured to combine various types of filters.

For example, the filter 120 may be provided in three pieces and may include a pre-carbon filter and a post-carbon filter, and a membrane filter or a hollow fiber membrane filter disposed between the pre-carbon filter and the post-carbon filter.

Of course, the number and type of the filters are not limited, but it is preferable that different types of functional filters are applied for the number that can be received in the water purifier 10 and for efficient water purification.

For reference, at least one filter may be separated from the water purifier in the process of hot water sterilization, which will be described below. When the filter is separated from the water purifier as described above, it is possible to prevent the filter from being damaged during the hot water sterilization process. When the filter is removed, it is advantageous to secure the flow rate, so that hot water sterilization can be performed more reliably and quickly.

The purified water which is purified while passing through the filter 120 is discharged to the outside of the water purifier 10. In this case, purified water may be discharged to the outside of the water purifier 10 through the water take-out nozzle 210.

For example, purified water that has passed through the filter 120 may be supplied to the water take-out nozzle 210 as a state of purified water while flowing through the purified water flow path 520.

As another example, the purified water passing through the filter 120 can be branched from the purified water flow path 520 to the hot water flow path 540, heated in the hot water module 160, and then supplied to the water take-out nozzle 210 in a state of hot water.

The purified water flow path 520 is provided with a water purification valve 651 to regulate the flow of purified water passing through the purified water flow path 520.

Meanwhile, the hot water flow path 540 is branched from the purified water flow path 520 and transfers the purified water passing through the filter 120 toward the water take-out nozzle 210, wherein the purified water is heated at the hot water module 160 provided on the hot water flow path 540 and then the heated hot water is transferred toward the water take-out nozzle 210. In one or more embodiments, a flow rate adjustment valve 671 is provided in the hot water flow path 540 to adjust the amount of purified water supplied to the hot water flow path 540.

In one or more embodiments, the hot water flow path 540 between the hot water module 160 and the water take-out nozzle 210 may include a hot water valve 630 for regulating the flow of hot water.

In the present disclosure, the sterilization module 180 is provided to sterilize various flow paths (pipes), valves, tanks, water take-out nozzles, and the like inside the water purifier.

The sterilization module 180 is installed on the sterilization flow path 530.

The sterilization flow path 530 is branched from the water supply flow path 510 into which raw water flows and then is merged into the water supply flow path 510.

As described above, the hot water heated in the sterilization module 180 flows into the water supply flow path 510 and then passes through the filter 120, sterilizes at least one of the purified water flow path 520, the hot water flow path 540, and the cold water flow path 550 while flowing at least one of the purified water flow path 520, the hot water flow path 540, and the cold water flow path 550.

For example, the sterilization flow path 530 and the sterilization module 180 may be disposed inside the housing 110.

The sterilization flow path 530 and the sterilization module 180 may be used in a state of being installed in the water purifier.

As another example, the sterilization flow path 530 and the sterilization module 180 may be disposed outside the housing 110.

The sterilization flow path 530 and the sterilization module 180 may be used in a state of being installed in the water purifier or may be used by being installed after being separated as needed.

Referring back to Fig. 4, the water supply flow path 510 may include a first water supply flow path 511 connecting the water supply source and the water supply valve 610, and a second water supply flow path 512 connecting the water supply valve 610 and the filter 120.

The sterilization flow path 530 may be branched from the first water supply flow path 511 and then be merged into the second water supply flow path 512.

Accordingly, the hot water generated by the sterilization module 180 may sterilize the flow path after the water supply valve 610 based on the flow direction of the water.

For reference, in the hot water sterilization mode, the water supply valve 610 is in a state of being closed, and the sterilization valve 620 is opened. Accordingly, the raw water flows through the first water supply flow path 511, passes the sterilization valve 620 and the sterilization flow path 530, and the second water supply flow path 512.

On the other hand, in the normal mode, that is, in a mode in which purified water, cold water, and hot water are supplied to the water take-out nozzle 210, the water supply valve 610 is opened and the sterilization valve 620 is maintained in a closed state. Thus, the water doie not flow through the sterilization flow path 530.

Accordingly, the raw water flows through the first water supply flow path 511 and the second water supply flow path 512.

A pressure reducing valve 660 for adjusting the water pressure of the incoming raw water may be installed in the first water supply flow path 511.

For example, the pressure reducing valve 600 may be installed before a branch point of the sterilization flow path 530 based on the flow direction of the raw water.

In one or more embodiments, in the sterilization flow path 530, a flow adjustment valve 672 may be installed between the sterilization valve 620 and the sterilization module 180.

The sterilization flow path 530 may include a first sterilization flow path 531 having one side connected to the first water supply flow path 511 and the other side connected to the inlet of the sterilization module 180, and a second sterilization flow path 532 having one side connected to the outlet of the sterilization module 180 and the other side connected to the purified water flow path 520.

The second sterilization flow path 532 may be connected to a first water purification flow path 521 to be described below.

Referring back to Fig. 4, a water purification valve 651 for regulating the flow of water is installed in the purified water flow path 520, and the purified water flow path 520 may include a first purified water flow path 521 that connects the filter 120 and the water purification valve 651 and a second purified water flow path 522 that connects the purified water valve 651 and the water take-out valve 641 installed at the side of the water take-out nozzle 210.

In one or more embodiments, a flow rate sensor 680 may be installed in the first purified water flow path 521.

In detail, the flow sensor 680 may be installed between the filter 120 and the branch point of the hot water flow path 540.

In one or more embodiments, the hot water flow path 540 may branch off from the first purified water flow path 521 and then merge at the second purified water flow path 522.

Alternatively, the hot water flow path 540 may have one side branched from the first purified water flow path 521 and the other side connected to the water take-out valve 641.

Alternatively, the hot water flow path 540 may have one side branched from the first purified water flow path 521 and the other side connected to the water take-out flow path 560.

In one or more embodiments, a flow rate adjustment valve 671 for adjusting the flow rate of water flowing into the hot water module 160 may be installed in the hot water flow path 540.

Referring back to Fig. 4, the water purifier according to the present disclosure further includes a water take-out flow path 560 having one side connected to the water take-out nozzle 210 and the other side connected to the second water purification flow path 520, and a water take-out valve 641 for regulating the flow of water flowing to the water take-out nozzle may be installed in the water take-out flow path 560.

In one or more embodiments, a drain valve 642 is installed in the water take-out valve 641 together therewith, and the water discharged from the drain valve 642 can be discharged to the outside of the housing 110 through a separate drain flow path 570.

In one or more embodiments, steam generated in the hot water tank of the hot water module 160 may be discharged to the outside through the drain flow path 570.

The water take-out valve 641 and the drain valve 642 may be formed separately or integrally.

The water take-out valve 641 and the drain valve 642 may be formed as a three way valve 640 having one inlet and two outlets. The three-way valve 640 may transfer the water supplied from the purified water flow path 520 to the water take-out flow path 560 or to the drain flow path 570.

In one or more embodiments, at least a portion of the hot water generated by the sterilization module 180 and flowing into the water take-out valve 641 or drain valve 642 is discharged to the water take-out nozzle 210, and the remaining part thereof can be discharged to the drain flow path 570.

If, after being generated in the sterilization module 180, all of the high-temperature hot water that has been sterilized in the flow path is discharged to the water take-out nozzle 210, 3L or more of hot water is continuously taken out to the water take-out nozzle 210 and thus it is disadvantageous to the safety of the user, and there is a inconvenience of having to process the discharged hot water.

In order to prevent this, the amount of hot water required for hot water sterilization of the water take-out flow path 560 and the water take-out nozzle 210 is supplied to the water take-out flow path 560 and discharged to the water take-out nozzle 210, and the remaining hot water is discharged through the drain flow path 570 to the outside.

For example, about 200 ml of hot water may be discharged to the water take-out flow path 560 and the water take-out nozzle 210, and the remaining hot water may be discharged to the outside through the drain flow path 570.

Referring back to Fig. 4, the water purifier may further include a cold water flow path 550 having one side branched from the purified water flow path 520 and the other side connected to a side of the water take-out nozzle 210, and a cold water module 150 provided on the cold water flow path 550 to cool the water passing through the cold water flow path 550.

The cold water flow path 550 may branch from the first purified water flow path 521 and then be merged into the second purified water flow path 522.

Meanwhile, the cold water flow path 550 transfers the purified water that has passed through the filter 120 toward the water take-out nozzle 210 and after cooling the purified water in the cold water module 150 provided on the cold water flow path 550, transfers the purified water toward the water take-out nozzle 210.

In one or more embodiments, the water purifier may further include a cold water valve 652 provided on the cold water flow path 550 or the purified water flow path 520 to regulate the flow of water flowing into the cold water flow path 550.

The water purification valve 651 and the cold water valve 652 may be formed separately or integrally.

The water purification valve 651 and the cold water valve 652 may be formed as a three way valve 650 having one inlet and two outlets. The three-way valve 650 may transmit the water supplied from the first purified water flow path 521 to the second purified water flow path 522 or to the cold water flow path 550.

Referring back to Fig. 4, the hot water generated by the sterilization module passes through the filter 120 and sterilizes the various flow paths and valves while flowing through the purified water flow path 520, the hot water flow path 540, and the cold water flow path 550, and some of the hot water may be discharged to the water take-out nozzle 210 through the water take-out flow path 560, and the rest may be discharged to the outside through the drain flow path 570.

In detail, the water discharged to the drain flow path 570 may be discharged to the outside of the water purifier 10 through a separate outlet formed at the rear or side of the water purifier 10 instead of the water take-out nozzle 210. In this case, the drain flow path 570 may extend to the outside of the water purifier 10, and the end of the drain flow path 570 may be connected to a sink, a sewer, or the like.

The water purifier 10 of the present disclosure may further include a steam flow path and a safety valve for discharging steam generated when hot water is heated in the hot water tank of the hot water module 160. Accordingly, it is possible to prevent the pressure inside the hot water tank from being excessively increased by the steam. The safety valve is configured to be opened at a predetermined pressure and may have various structures within a range in which the steam inside the hot water tank can be smoothly discharged.

Meanwhile, the vapor flow path may also be connected to the drain flow path 570. Accordingly, the steam discharged from the hot water tank may also be discharged to the outside of the water purifier 10 through the drain flow path 570.

Hereinafter, an example of the hot water sterilization process of the water purifier 10 configured as described above will be described.

Fig. 6 is a flowchart illustrating a method for controlling a water purifier according to an embodiment of the present disclosure.

Referring to Figs. 4 to 6, the water supply valve 610 is closed and the sterilization valve 620 is opened for hot water sterilization and hot water washing. Then, the sterilization module 180 is turned on.

The water purification valve 651, the cold water valve 652, and the hot water valve 630 are opened, and the hot water module 160 and the cold water module 150 do not operate.

The raw water flowing into the first water supply flow path 511 flows into the first sterilization flow path 531.

Then, by the sterilization module 180 mounted on the sterilization flow path 530, the raw water is heated with hot water.

The hot water heated in the sterilization module 180 is supplied to the second water supply flow path 512 through the second sterilization flow path 532, and the hot water supplied to the second water supply flow path 512 passes through the filter 120 and then is supplied to the purified water flow path 520.

At this time, in a case where the filter 120 is in a separated state, the hot water supplied to the second water supply flow path 512 flows directly into the first purified water flow path 521.

Then, the hot water flowing into the first purified water flow path 521 flows to the water take-out valve 641 through the purified water valve 651 and the second purified water flow path 522.

The hot water flowing into the first purified water flow path 521 may be branched into the hot water flow path 540, pass through the hot water flow path 540 and the hot water module, and then flow to the water take-out valve 641.

The hot water flowing into the first purified water flow path 521 is branched into the cold water flow path 550, passes through the cold water flow path 550 and the cold water module, and then passes through the second purified water flow path 522, and flows into the water take-out valve 641.

In a state where the water take-out valve 641 is opened, at least a portion of the hot water flowing into the water take-out valve 641 is supplied to the water take-out flow path 560 and discharged to the outside through the water take-out nozzle 210.

Then, the water take-out valve 641 is closed, and the drain valve 642 is opened. As the drain valve 642 is opened, the hot water flowing into the water take-out valve 641 is supplied to the drain flow path 570 and discharged to the outside through the drain flow path 570.

Accordingly, Hot water sterilization and hot water washing of the purified water flow path 520, the hot water flow path 540, the hot water module, the cold water flow path 550, the cold water module, the water take-out flow path 560, the drain flow path 570, and the water take-out nozzle 210 may be performed by the hot water generated by the sterilization module 180.

In this case, hot water sterilization and hot water washing of the purified water flow path 520, the hot water flow path 540, and the cold water flow path 550 may be performed simultaneously or separately.

Referring back to Fig. 5, the water purifier of the present disclosure may include a manipulation part 410 which receives hot water sterilization and hot water washing commands from the user and a controller 170 which controls to open and close the various valves when the hot water sterilization and hot water washing commands are input to the manipulation part 410.

For example, when the hot water sterilization and hot water washing commands are input to the manipulation part 410, the controller 170 may turn on the sterilization valve 620 and the sterilization module 180 and may turn off the water supply valve 610, the hot water module 160, and the cold water module 150.

Here, the controller 170 may refer to the above-described control assembly 170 or may refer to a controller provided separately from the control assembly 170.

In this embodiment, the manipulation part 410 may be provided on the upper surface of the water take-out module 200.

In order for the manipulation part 410 to be provided on the upper surface of the water take-out module 200 as described above, a receiving space in which the manipulation part 410 is received may be formed on the upper surface of the housing 220.

According to the present disclosure, the manipulation part 410 is provided on the upper surface of the water take-out module 200, so that a tall adult user can easily adjust the overall operation of the water purifier 10. On the other hand, in a case of a small child user, the manipulation part 410 provided on the upper surface of the water take-out module 200 cannot be recognized, and even if it is recognized, it cannot be easily manipulated, and thus it is possible to prevent safety accidents such as burns on the hand while hot water flows out by pressing manipulation part 410 at random.

As an example, the manipulation part 410 is provided with a touch panel and may include a capacity button 411 for selecting the water take-out capacity, a hot water button 412 for selecting hot water and further selecting the temperature of the hot water to be taken out, a water purification button 413 for selecting purified water, a cold water button 414 for selecting cold water, a continuous button 415 for selecting continuous water take-out, and a sterilization button 416 for inputting hot water sterilization and hot water washing commands.

In addition, the manipulation part 410 may be formed to be inclined downward from the rear to the front. Accordingly, a user located in front of the water purifier may manipulate the manipulation part 410 in a state where readability is secured.

In addition, the controller 170 may include an inverter 172. The inverter 172 may adjust the amount of heating by controlling the amount of current applied to the hot water module 160. In other words, the output of the hot water module 160 may be adjusted by the inverter 172.

In a case where the amount of heating is adjusted in this way, the water may be heated to a temperature desired by the user.

In addition, the controller 170 may further include a noise filter 173. The noise filter 173 serves to remove noise from a signal including noise generated by a magnetic field generated by a current applied to the hot water module 160.

The noise filter 520 may control noise in control signals output from the controller 170 and applied to various valves or the like.

In addition, the controller 170 may include a timer 171 for measuring the sterilization and washing time.

According to the proposed disclosure, it is possible to sterilize various flow paths and valves inside the water purifier by circulating hot water heated in a separate sterilization module.

According to the present disclosure, since hot water sterilization proceeds while continuous water take-out proceeds, there is an effect that while sterilization of the flow path and the valve proceed by the flow rate, at the same time, the removal of foreign substances can be made.

According to the present disclosure, it is possible to wash the entire flow paths and the valves inside the water purifier from the water supply flow path connected to the water supply source to the water take-out flow path connected to the water take-out nozzle or outlet.

According to the present disclosure, there is an effect that the washing of the flow path and the valve inside the water purifier can be automatically performed only by pressing a button at a time desired by the user.

According to the present disclosure, there is a possible effect of hot water sterilization and hot water washing up to the filter installed at the entrance of the water purifier flow path.

According to the present disclosure, part of the hot water generated while performing the hot water sterilization and the hot water washing in the entire flow path included in the water purifier can be discharged to the water take-out nozzle, and the rest can be drained to the rear end of the water purifier, so that there is an effect that it is possible to prevent safety accidents such as burns that may occur while a large amount of hot water is discharged through the water take-out nozzle, and that it is possible to prevent the user from having to process a large amount of hot water.

## Claims

1. A water purifier comprising:
a housing (110) forming a storage space;
a filter (120) provided inside the housing (120) to purify water flowing thereinto and for outputting purified water;
a first water supply flow path (511) for supplying water from a water supply source outside the housing (110), and
a second water supply flow path (512) receiving water from the first water supply flow path (511) and for supplying water to the filter (120);
a water supply valve (610) provided between the first water supply flow path (511) and the second water supply flow path (512) to regulate the flow of water from the first water supply flow path (511) to the second water supply flow path (512);
a water take-out nozzle (210) provided outside of the housing (110) for taking out water which has passed the filter (120);
a purified water flow path (520) for guiding the purified water output by the filter (120) toward the water take-out nozzle (210);
a hot water flow path (540) branched from the purified water flow path (520) and the connected to the water take-out nozzle (120);
a hot water module (160) provided in the hot water flow path (540) to heat the purified water passing through the hot water flow path (540);
a sterilization flow path (530) branched from the first water supply flow path (511) and merged into the second water supply flow path (520);
a sterilization valve (620) provided in the sterilization flow path (530) to regulate the flow of water passing through the sterilization flow path (530);
a sterilization module (180) provided on the sterilization flow path (530) to heat water passing through the sterilization flow path (530); and
a controller (170) configured to control the water supply valve (610) to be opened and the sterilization valve (620) to be blocked in a water purification mode and configured to control the sterilization valve (620) to be opened and the water supply valve (610) to be blocked in a sterilization mode.

2. The water purifier of claim 1, wherein a pressure reducing valve (660) is installed in the first water supply flow path (511) for adjusting the water pressure of raw water flowing into the first water supply flow path (511).

3. The water purifier of claim 1 or 2, wherein a flow rate adjustment valve (672) is installed between the sterilization valve (620) and the sterilization module (180).

4. The water purifier of any one of the preceding claims, wherein a water purification valve (651) is installed in the purified water flow path (520) to regulate the flow of water.

5. The water purifier of claim 4, wherein the purified water flow path (520) includes a first purified water flow path (521) connecting the filter (120) and the water purification valve (651), and a second purified water flow path (522) connecting the water purification valve (651) and a water take-out valve (641) installed on the side of the water take-out nozzle (210).

6. The water purifier of claim 5, wherein the hot water flow path (540) is branched from the first purified water flow path (521) and then merges at the second purified water flow path (522).

7. The water purifier of any one of the preceding claims, wherein a flow rate adjustment valve (671) configured to adjust the flow rate of water flowing into the hot water module (160) is installed in the hot water flow path (540).

8. The water purifier of claim 5, 6 or 7, further comprising a water take-out flow path (560) having one side connected to the water take-out nozzle (210) and the other side connected to the second purified water flow path (522), preferably a water take-out valve (641) is installed in the water take-out flow path (560) to regulate the flow of water flowing to the water take-out nozzle (210).

9. The water purifier of claim 8, wherein a drain valve (642) is installed in water take-out flow path (560), preferably in the water take-out valve (641), wherein preferably water discharged from the drain valve (642) is discharged to the outside of the housing (110) through a drain flow path (570).

10. The water purifier of claim 8 or 9, wherein at least a portion of the hot water generated by the sterilization module (180) and flowing into the water take-out valve (641) or the drain valve (642) is discharged to the water take-out nozzle (210), and the remaining portion thereof is discharged to the drain flow path (570).

11. The water purifier according to any one of the preceding claims, further comprising:
a cold water flow path (550) branched from the purified water flow path (520) and connected to a side of the water take-out nozzle (210); and/or
a cold water module (150) provided on the cold water flow path (550) to cool the water passing through the cold water flow path (550).

12. The water purifier of claim 11, further comprising a cold water valve (652) provided on the cold water flow path (550) to regulate the flow of water flowing through the cold water flow path (550).

13. The water purifier of claim 12, wherein the cold water valve (652) and the water purification valve (651) are integrally formed.

14. The water purifier according to any one of the preceding claims, wherein the hot water generated by the sterilization module (180) is configured to sterilize at least one of the hot water module (160), the cold water module (150), and various flow paths and valves.

15. The water purifier according to any one of the preceding claims 11-14, further comprising:
a manipulation part (410) configured to receive a sterilization command from the user,
wherein when a sterilization command is input to the manipulation part (410), the controller (170) is configured to turn on the sterilization valve (620) and the sterilization module (180) and to turn off the water supply valve (610), the hot water module (160), and the cold water module (150).
